# EUROPEAN PATENT APPLICATION

(11) **EP 3 879 778 A1**
(43) Date of publication of application: **15.09.2021**
(21) Application number: 18939835.7
(22) Date of filing: 07.12.2018
(51) Int. Cl.: H04L 29/06, H04L 12/24, H04L 12/741

(54) **STATIC ROUTE DEPLOYMENT METHOD, DEVICE AND SYSTEM**

(30) Priority: 16.11.2018 CN 201811368044
(71) Applicant: Wangsu Science & Technology Co., Ltd., Shanghai 201800 (CN)
(72) Inventor: ZHENG, Aqiang, Shanghai 201800 (CN)
(74) Representative: De Arpe Tejero, Manuel
(86) International application number: PCT/CN2018/119884
(87) International publication number: WO 2020/098025

(57) **Abstract**

The present disclosure provides a method, a system, a device for deploying static routes. The method for deploying static routes includes reading multi-line routing deployment tasks from a message center, where each of the multi-line routing deployment tasks at least includes an identifier of a node server to be deployed; inquiring basic information of the node server to be deployed according to the identifier, where the basic information includes an IP address of each gateway of a plurality of gateways corresponding to the node server to be deployed and a network service provider corresponding to each gateway of the plurality of gateways; and generating a static routing configuration file according to the IP address of each gateway of the plurality of gateways and an IP address segment corresponding to each network service provider and delivering the static routing configuration file to the node server to be deployed through a preset deployment server.

## Description

### FIELD OF THE DISCLOSURE

The present disclosure generally relates to the technical field of Internet and, more particularly, relates to a method, a device, and a system for deploying static routes.

### BACKGROUND

Currently, when a static route is deployed for a server in a content delivery network (CDN), a routing configuration file is usually stored in a designated path. In such way, when the server is started, the corresponding routing configuration file may be read from the designated path, thereby completing the deployment of the static route.

However, if a link state changes, or the IP address segment of a network service provider changes, the existing routing configuration file may be invalidated. Currently, in order to redeploy the correct static route, an administrator needs to manually change the routing configuration file for each server. Obviously, the manual processing method may not only be inefficient, but also waste more manpower and resources, thereby increasing the maintenance cost of the CDN.

### BRIEF SUMMARY OF THE DISCLOSURE

The objective of the present application is to provide a method, a device, and a system for deploying static routes, which may automatically complete the deployment process of the static routes, thereby improving deployment efficiency and reducing deployment cost.

To achieve the above-mentioned objective, one aspect of the present application provides a method for deploying static routes. The method is applied to an information maintenance server. The method includes reading multi-line routing deployment tasks from a message center, where each of the multi-line routing deployment tasks at least includes an identifier of a node server to be deployed; inquiring basic information of the node server to be deployed according to the identifier, where the basic information includes an IP address of each gateway of a plurality of gateways corresponding to the node server to be deployed and a network service provider corresponding to each gateway; and generating a static routing configuration file according to the IP address of each gateway and an IP address segment corresponding to each network service provider and delivering the static routing configuration file to the node server to be deployed through a preset deployment server.

To achieve the above-mentioned objective, another aspect of the present application provides an information maintenance server. The information maintenance server includes a memory and a processor; the memory is configured to store computer programs; and the above-mentioned method for deploying static routes is implemented when the computer programs are executed by the processor.

To achieve the above-mentioned objective, another aspect of the present application provides a system for deploying static routes. The system includes a node server, a message center, a monitoring platform, an information maintenance server, and a preset deployment server, where the node server is configured to identify an own routing state and report a routing state message to the message center after generating the routing state message according to the routing state; the message center is configured to forward the routing state message to the monitoring platform or the information maintenance server according to a type of the routing state message; the information maintenance server is configured to read multi-line deployment tasks from the message center, generate a static routing configuration file according to the multi-line routing deployment tasks, and upload the static routing configuration file to the preset deployment server; and the preset deployment server is configured to deliver the static routing configuration file to the node server to be deployed, thereby configuring the static routes in the node server to be deployed.

It can be seen that, in the technical solutions provided by the present application, the node server may actively identify the own routing state and select different message formats according to different routing state types. After a content in the routing state is filled into a message format, the corresponding routing state message may be generated. The routing state message may be reported to the message center, and the message center may send the routing state message to the monitoring platform or the information maintenance server. The routing state message sent to the information maintenance server may be configured as the multi-line deployment task. The basic information of each node server may be maintained by the information maintenance server, where the basic information may include the IP address of each gateway in the node server and the network service provider corresponding to each gateway. In such way, for the node server to be deployed, the static routing configuration file may be generated by the information maintenance server according to the IP address of each gateway and the IP address segment corresponding to each network service provider, and may be delivered to the node server to be deployed through the preset deployment server. It can be seen that the technical solutions provided by the present application may automatically complete the deployment process of the static route, thereby improving deployment efficiency and reducing deployment cost.

### BRIEF DESCRIPTION OF THE DRAWINGS

In order to clearly illustrate the technical solutions in the embodiments of the present disclosure, the accompanying drawings needed to be used in the description of the disclosed embodiments are briefly described hereinafter. Obviously, the drawings in the following description are merely some embodiments of the present disclosure. Other drawings derived from such drawings may be obtained by those skilled in the art without creative work.
FIG. 1 illustrates a structural schematic of a static route deployment system according to embodiments of the present disclosure;
FIG. 2 illustrates a flow chart of a method for identifying routing states according to embodiments of the present disclosure;
FIG. 3 illustrates a structural schematic of a node server according to embodiments of the present disclosure;
FIG. 4 illustrates a flow chart of a static route deployment method according to embodiments of the present disclosure;
FIG. 5 illustrates a schematic of a static route deployment interaction according to embodiments of the present disclosure; and
FIG. 6 illustrates a structural schematic of a computer terminal in the present disclosure.

### DETAILED DESCRIPTION

To more clearly describe the objectives, technical solutions and advantages of the present disclosure, the present disclosure is further illustrated in detail with reference to the accompanying drawings in conjunction with embodiments.

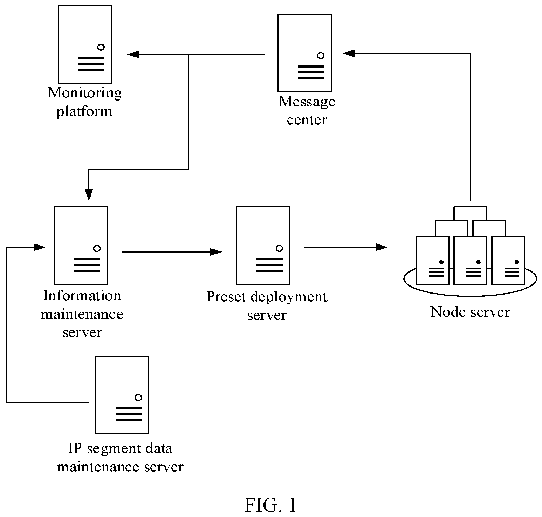

The present application provides a static route deployment system. Referring to FIG. 1, the system may include a node server, a message center, a monitoring platform, an information maintenance server, and a preset deployment server. The node server may be an edge single-line or two-line node server or a transit single-line or two-line node server.

The node server may be configured to identify an own routing state and report a routing state message to the message center after generating the routing state message according to the routing state.

The message center may be configured to forward the routing state message to the monitoring platform or the information maintenance server according to a type of the routing state message.

The information maintenance server may be configured to read multi-line deployment tasks from the message center, generate a static routing configuration file according to each of the multi-line deployment tasks, and upload the static routing configuration file to the preset deployment server.

The preset deployment server may be configured to deliver the static routing configuration file to the node server to be deployed, thereby configuring the static routes in the node server to be deployed.

In addition, as shown in FIG. 1, the system may further include an IP segment data maintenance server. The IP segment data maintenance server may be configured to send an update instruction to the information maintenance server when the IP segment data changes.

Correspondingly, the information maintenance server may further be configured to acquire and store latest IP segment data from the IP segment data maintenance server in response to the update instruction, where the IP segment data may include a mapping relationship between an IP segment and a network service provider.

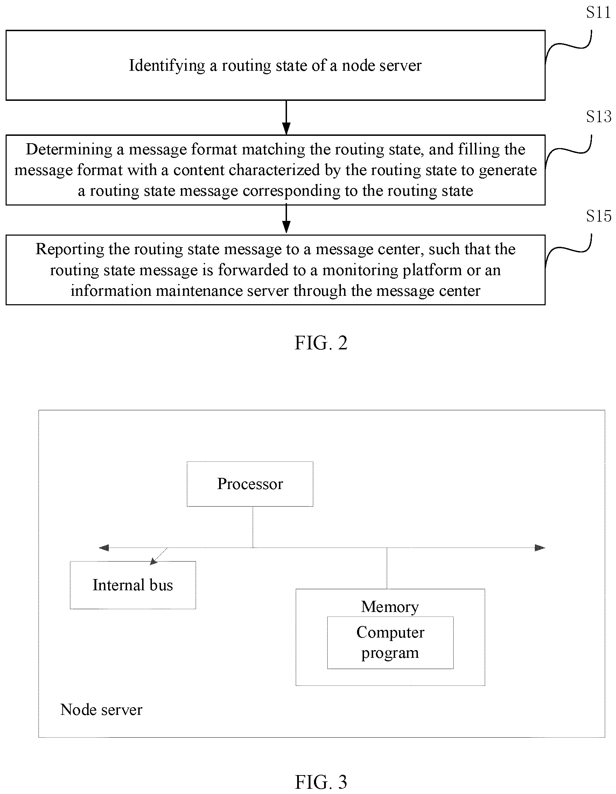

Specifically, the present application further provides a method for identifying routing states. The method may be applied to the above-mentioned node server. Referring to FIG. 2, the method may include the following steps.

In S11, the routing state of the node server may be identified.

In one embodiment, a routing state identification software may be pre-installed in the node server. The software may periodically check the routing state of the node server. For example, the software may check the routing state of the node server every 10 seconds.

In practical applications, the routing state identification software may identify multiple routing states during operation. Specifically, the node server may have one or more network interface cards, and each network interface card may have an own IP address. Different IP addresses may belong to different IP address segments which may be mapped to the network service providers. For example, the IP address segment of 1.2.3.0/24 may correspond to the Netcom network service provider. In such way, the network service provider corresponding to the network interface card may be determined according to the IP address segment of the IP address configured by the network interface card. If multiple network interface cards, corresponding to different network service providers, are configured in a same node server, it indicates that the node server may be a two-line or multi-line server; and in this case, the static routes are required to be deployed in the node server.

In one embodiment, when identifying the routing state of the node server, the IP address of the network interface card configuration in the node server may be identified, and the network service provider corresponding to each IP address may be determined. Then, the number of determined network service providers may be calculated. If the number of the network service providers is more than one, it may indicate that the node server may be a two-line or multi-line server, and currently, it may determine that the static routes are required to be deployed in the node server.

In one embodiment, other routing states of the node server may also be identified. For example, whether the node server has an abnormal routing configuration may be identified, where the abnormal routing configuration may include multiple situations such as abnormal gateway configuration, abnormal IP address configuration, configuration loss, and the like. In addition, whether the node server has active/standby link interruption in a same network service provider may be identified, whether the node server has a routing switch between different network service providers may also be identified, and the like.

In one embodiment, the identified routing states may be roughly divided into two categories: one category is an abnormal alarm type which may correspond to the routing states of the above-mentioned abnormal routing configuration; another category is a routing change type which may correspond to the routing states of the above-mentioned needed static route deployment, multi-line routing switch, and link interruption switch.

In S13, a message format matching the routing state may be determined, and the message format may be filled with the content characterized by the routing state to generate the routing state message corresponding to the routing state.

In one embodiment, different types of routing states may have different message formats. Therefore, the message formats may also be divided into two categories: one category is the message format of the abnormal alarm type, and another category is the message format of the routing change type. The message format of the abnormal alarm type may be expressed as:
[IP: alarm: alarm identifier]
where, the IP may refer to the IP address of the node server where the abnormal alarm occurs, the alarm may correspond to the abnormal alarm type, and the alarm identifier may be used to indicate a specific alarm type. In practical applications, the alarm types may be divided into three types: an abnormal gateway configuration alarm, an IP configuration error alarm, and a configuration loss alarm. The alarm types of the three subdivisions may correspond to the identifiers of 0, 1, and 2, respectively. In such way, different alarm identifiers may be selected according to detailed alarm types.

In addition, the message format of the routing change type may be expressed as:
[IP: static route: routing change identifier]
where, the IP may refer to the IP address of the node server where the routing change occurs, the static route may correspond to the routing change type, and the routing change identifier may be used to indicate a routing change specific type. In practical applications, the routing change types may be divided into four types: a wide area network multi-line routing configuration, a metropolitan area network multi-line routing configuration, a multi-line default routing switch of a special local area network, and a multi-line or single-line interruption switch of overseas and domestic transit nodes. The routing change types of the four subdivisions may correspond to the identifiers of 0, 1, 2, and 3, respectively. In such way, different routing change identifiers may be selected according to detailed routing change types.

It can be seen from the above-mentioned description that, if the type of the routing state is the abnormal alarm type, the identifier sequence corresponding to the type of the routing state may at least include the identifier for characterizing the abnormal gateway configuration, the identifier for characterizing the IP configuration error, and the identifier for characterizing the configuration loss; and if the type of the routing state is the routing change type, the identifier sequence corresponding to the type of the routing state may at least include the identifier for characterizing a wide area network multi-line routing configuration, the identifier for characterizing a metropolitan area network multi-line routing configuration, the identifier for characterizing a multi-line default routing switch of a special local area network, and the identifier for characterizing a multi-line or single-line interruption switch of overseas and domestic transit nodes.

In one embodiment, after identifying the routing state of the node server, the type of the routing state may be determined, and the message format corresponding to the type of the routing state may be used as the message format matching the routing state, where the type of the routing state may at least include the abnormal alarm type and the routing change type.

In one embodiment, when generating the routing state message corresponding to the routing state, the IP address of the node server may be written into a specified location in the message format. The specified location may be the above-mentioned position marked with "IP". Then, a target identifier for characterizing the routing state may be determined in the identifier sequence corresponding to the type of the routing state, and the target identifier may be written into the message format.

For example, if the node server with the IP address of 198.162.1.1 has the IP configuration error alarm type, the message format of [IP: alarm: alarm identifier] may be selected. Then, 198.162.1.1 may be filled into the position marked with "IP" in the message format, and the alarm identifier "1" may be selected, so the generated routing state message may be [198.162.1.1: alarm: 1].

In S15, the routing state message may be reported to the message center, so the routing state message may be forwarded to the monitoring platform or the information maintenance server through the message center.

In one embodiment, after generating the routing state message in the node server, the routing state message may be reported to the message center. The message center may utilize a queue management software to add the routing state message reported by each node server into the message queue. The queue management software may be, for example, the message queue service software such as kafka, mq and the like.

In practical applications, in order to distinguish different types of routing state messages, a plurality of message queues may be configured in the message center according the different message types. The message queues may include, for example, a multi-line routing queue, an alarm queue, a local area network queue, and a line switch queue. The multi-line routing queue may store the routing state message for characterizing the static routes which are required to be deployed; the alarm queue may store the routing state message of the above-mentioned abnormal alarm type; the local area network queue may store the routing state message of the routing change in the local area network; and the line switch queue may store the routing state message where line switching may be required between different links. In such way, the routing state message reported by the node server may be stored in the corresponding message queue according to the message type.

In one embodiment, the message center may forward the routing state message in the alarm queue to the monitoring platform, thereby performing a subsequent troubleshooting process through the monitoring platform. Due to the involvement of the redeployment of the static routes, the routing state message in other queues may be sent to the information maintenance server which may process the routing state message as the deployment task of the static routes.

In one embodiment, after reporting the routing state message, the node server may check whether the routing configuration file is received according to a specified time period, where the routing configuration file may be stored in a specified path of the node server. Therefore, the node server may check whether an updated routing configuration file exists in the specified path according to the specified time period. If the updated routing configuration file exists, it may indicate that a latest delivered routing configuration file is received. If the latest delivered routing configuration file is received, the node server may deploy the static routes in the node server according to the latest delivered routing configuration file and may check whether the static routes are deployed successfully after the deployment is complete. Specifically, the node server may try to search a configured detailed IP segment through a preset route - n command. If the configured detailed IP segment is inquired normally, it may indicate that the deployment is successful. Subsequently, the node server may repeat the routing state identification process and check new routing configuration files, thereby automatically deploying the static route.

Referring to FIG. 3, the present application further provides a node server. The node server may include a memory and a processor. The memory may be configured to store computer programs which may implement the above-mentioned routing state identification method when the computer programs are executed by the processor.

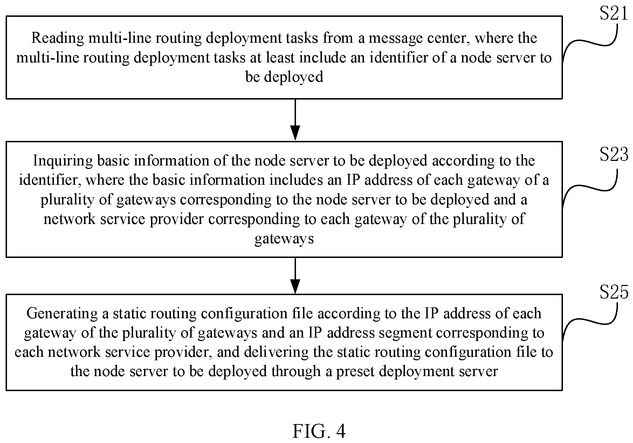

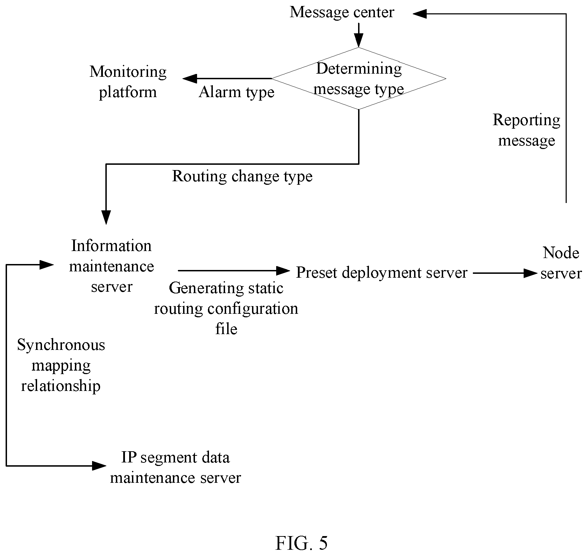

The present application further provides a static route deployment method, which may be applied to the above-mentioned information maintenance server. Referring to FIG. 4 and FIG. 5, the method may include the following steps.

In S21, multi-line routing deployment tasks may be read from the message center, and each of the multi-line routing deployment tasks may at least include the identifier of the node server to be deployed.

In one embodiment, the information maintenance server may periodically read the multi-line routing deployment tasks from the multi-line routing queue of the message center. The multi-line routing deployment tasks may be the routing state messages charactering the static routes which are required to be deployed in the above-mentioned embodiments. The multi-line routing deployment tasks may include the IP address of the node server to be deployed, and the IP address may be used as the identifier of the node server to be deployed.

In S23, basic information of the node server to be deployed may be inquired according to the identifier. The basic information may include an IP address of each gateway in the node server to be deployed and a network service provider corresponding to each gateway.

In the information maintenance server, basic information of each node server in the CDN may be maintained. The basic information may include the IP address of the node server, the IP address of each network interface card configured in the node server, the IP address of each gateway corresponding to the node server, and the network service provider corresponding to each gateway. In the information maintenance server, the basic information and the IP address of the node server may be stored in the form of key-value pair. The IP address of the node server may be regarded as the identifier of the node server which is used as the key in the key-value pair, and the basic information of the node server may be used as the corresponding value. In such way, the basic information of the node server to be deployed may be inquired according to the identifier of the node server to be deployed. For example, the basic information of the node server to be deployed in the information maintenance server may be the following:

{the IP address of network interface card 1 is 192.168.0.24, the IP address of the corresponding gateway is 192.168.0.1., the corresponding network service provider is Telecommunications;

the IP address of network interface card 2 is 192.168.1.24, the IP address of the corresponding gateway is 192.168.1.1., the corresponding network service provider is Netcom}.

In addition, the mapping relationship between the IP address segment and the network service provider may also be maintained. For example, the mapping relationship may be expressed as:
1.2.3.0/24 Netcom
32.42.32.0/24 Netcom
18.14.0.0/16 Netcom
89.32.12.0/24 Netcom

The above-mentioned mapping relationship may indicate that the IP addresses located in the IP address segments belong to the network service providers of Netcom.

In practical applications, the mapping relationship between the IP address segment and the network service provider may be provided by the IP segment data maintenance server of a third-party. The mapping relationship between the IP address segment and the network service provider may change with the change of the network architecture. In the IP segment data maintenance server, the mapping relationship between the IP address segment and the network service provider may be continuously updated. Once the mapping relationship is changed, the IP segment data maintenance server may send an update instruction to the information maintenance server. After receiving the update instruction, the information maintenance server may acquire and store latest IP segment data from the IP segment data maintenance server in response to the update instruction, and the IP segment data may include the mapping relationship between the IP address segment and the network service provider. In such way, the latest IP segment data may be continuously maintained in the information maintenance server through the data synchronization between the information maintenance server and the IP segment data maintenance server.

In S25, a static routing configuration file may be generated according to the IP address of each gateway and an IP address segment corresponding to each network service provider, and the static routing configuration file may be delivered to the node server to be deployed through the preset deployment server.

In one embodiment, the purpose of deploying the static routes for the node server is to forward all data generated in each IP segment through the corresponding gateway. Therefore, the IP segment corresponding to each gateway may need to be specified when the static route configuration file is generated.

Specifically, for the current gateway of the plurality of gateways, a target network service provider corresponding to the current gateway may be identified, and a target IP address segment corresponding to the target network service provider may be inquired. For example, the current gateway may correspond to the Netcom network service provider, and the IP address segments of the Netcom network service provider are 1.2.3.0/24, 32.42.32.0/24, 18.14.0.0/16, and 89.32.12.0/24. In such way, all information in the above-mentioned four IP address segments should be forwarded through the current gateway. Therefore, the static routing information of the current gateway may be generated, and the static routing information may be used to characterize that the information belonging to the target IP address segment may be forwarded through the IP address of the current gateway. In practical applications, if the IP address of the current gateway is 192.168.1.1, the generated static routing information of the current gateway may be the following:
any net 1.2.3.0 netmask 255.255.255.0 gw 192.168.1.1
any net 32.42.32.0 netmask 255.255.255.0 gw 192.168.1.1
any net 18.14.0.0 netmask 255.255.0.0 gw 192.168.1.1
any net 89.32.12.0 netmask 255.255.255.0 gw 192.168.1.1
where, net may represent a starting address of the IP segment, netmask may represent a subnet mask, and gw may represent an IP address of the gateway. The meaning of the above-mentioned generated static routing information is that any message in the address range of 1.2.3.0/24, 32.42.32.0/24, 18.14.0.0/16, and 89.32.12.0/24 may be forwarded through the gateway of 192.168.1.1.

In such way, each gateway may generate own static routing information. Finally, the static routing information of each gateway may be summarized, and the summarized information may be used as the static routing configuration file of the node server to be deployed.

In one embodiment, the node server to be deployed may have a default route. The default route may include an IP address of one default gateway, and all messages of the node server to be deployed may be sent or received through the default gateway. Since the node server to be deployed may be a two-line or multi-line server, forwarding all messages by using only one default gateway may affect user experience. In this case, different gateways need to be configured for different network service providers. For the default gateway, the default route may be used; and for gateways other than the default gateway, the corresponding static routing information may need to be generated. Specifically, for a target gateway in other gateways, the target network service provider corresponding to the target gateway may be identified, and the target IP address segment corresponding to the target network service provider may be inquired. Then, the static routing information of the target gateway may be generated. The static routing information may be used to characterize that the information belonging to the target IP address segment may be forwarded through the IP address of the target gateway. Finally, the static routing information of gateways other than the default gateway in the plurality of gateways may be summarized, and the summarized information may be used as detailed routes of the node server to be deployed. In such way, after the detailed routes are generated, the combination of the default route and the detailed routes may be used as the static routing configuration file of the node server to be deployed. In such way, the message in the IP address segment defined by the detailed routes may be forwarded by the corresponding gateway. The message in the IP address segment which is not included in the detailed routes may be forwarded through the default gateway specified by the default route.

In one embodiment, when reading the multi-line routing deployment tasks from the message center, the information maintenance server may read a number of multi-line routing deployment tasks not-exceeding the message threshold according to a preset message threshold. For example, the message threshold is 100, so at most 100 multi-line routing deployment tasks may be read in a single reading process. After reading multiple multi-line routing deployment tasks, the multiple read multi-line routing deployment tasks may be combined into one deployment task. Subsequently, after the static routing configuration file may be generated for each of the multi-line deployment tasks, the plurality of generated static routing configuration files may be integrated into one data packet. In such way, the integrated data packet may correspond to the combined deployment task. Finally, the integrated data packet may be delivered to the corresponding plurality of node servers through the preset deployment server, thereby completing the process of deploying the static routes in the plurality of node servers.

The application further provides an information maintenance server. The information maintenance server may include a memory and a processor. The memory may be configured to store computer programs which may implement the above-mentioned static route deployment method when the computer programs are executed by the processor.

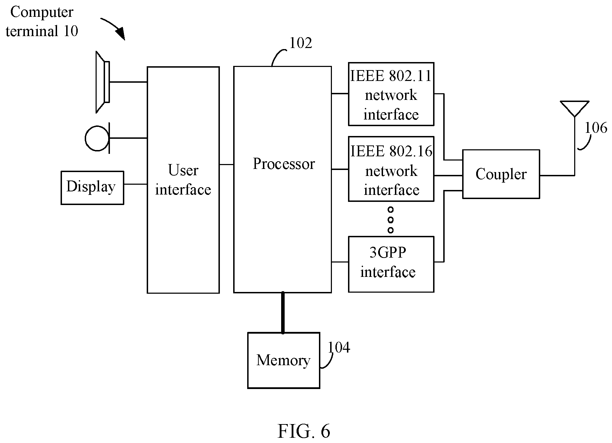

Referring to FIG. 6, in the present application, the technical solutions in the above-mentioned embodiments may be applied to a computer terminal 10 shown in FIG. 6. The computer terminal 10 may include one or more (only one shown in FIG. 6) processors 102 (the processors 102 may include, but not be limited to, processing devices such as microprocessor units (MCU) or programmable logic devices (FPGA field programmable gate array) and the like), a memory 104 for storing data, and a transmission module 106 configured for communication function. It should be understood by those skilled in the art that the structure shown in FIG. 6 is merely illustrative and does not limit the structure of the above-mentioned electronic device. For example, the computer terminal 10 may also include more or less components than that shown in FIG. 6 or have a different configuration from the configuration shown in FIG. 6.

The memory 104 may be configured to store software programs and modules of application software, and the processor 102 may execute multiple functional applications and data processing by running the software programs and modules stored in the memory 104. The memory 104 may include high speed random-access memory, and also include non-volatile memory such as one or more magnetic storage devices, flash memory, or other non-volatile solid-state memory. In some examples, the memory 104 may further include memory remotely located to the processor 102, which may be connected to the computer terminal 10 through a network. Examples of the above-mentioned networks may include, but not be limited to, the Internet, intranets, local area networks, mobile communication networks, and combination thereof.

The transmission device 106 is used to receive or transmit data via a network. The above-mentioned specific network examples may further include a wireless network provided by a communication provider of the computer terminal 10. In an example, the transmission device 106 may include a network interface controller (NIC) which may communicate with the Internet by connecting with other network devices via a base station. In an example, the transmission device 106 may be a radio frequency (RF) module which may communicate with the Internet via a wireless manner.

It can be seen that, in the technical solutions provided by the present application, the node server may actively identify the own routing state and select different message formats according to different routing state types. After the content in the routing state is filled into the message format, the corresponding routing state message may be generated. The routing state message may be reported to the message center, and the message center may send the routing state message to the monitoring platform or the information maintenance server. The routing state message sent to the information maintenance server may be configured as the multi-line deployment task. The basic information of each node server may be maintained by the information maintenance server, where the basic information may include the IP address of each gateway in the node server and the network service provider corresponding to each gateway. In such way, for the node server to be deployed, the static routing configuration file may be generated by the information maintenance server according to the IP address of each gateway and the IP address segment corresponding to each network service provider, and the static routing configuration file may be delivered to the node server to be deployed through the preset deployment server. It can be seen that the technical solutions provided by the present application may automatically complete the deployment process of the static routes, thereby improving deployment efficiency and reducing deployment cost.

Through the description of above-mentioned embodiments, those skilled in the art may clearly understand that the embodiments may be implemented by means of software in conjunction with an essential common hardware platform and, of course, may be implemented by hardware. Based on such understanding, the essential part of the above-mentioned technical solutions or the part that contribute to the prior art may be embodied in the form of software products. The software products may be stored in computer readable storage media, such as ROM/RAM, magnetic disk, optical disk, and the like, and may include a plurality of instructions to enable a computer device (may be a personal computer, a server, a network device, and the like) to execute the methods described in various embodiments or parts of the embodiments.

The above-mentioned descriptions are merely certain preferred embodiments of the present disclosure and are not intended to limit the present disclosure. Without departing from the spirit and principles of the present disclosure, any modifications, equivalent substitutions, and improvements, and the like should fall within the scope of the present disclosure.

## Claims

1. A method for deploying static routes, applied to an information maintenance server, the method comprising:
reading multi-line routing deployment tasks from a message center, wherein the multi-line routing deployment tasks at least include an identifier of a node server to be deployed;
inquiring basic information of the node server to be deployed according to the identifier, wherein the basic information includes an IP address of each gateway of a plurality of gateways corresponding to the node server to be deployed and a network service provider corresponding to each gateway of the plurality of gateways; and
generating a static routing configuration file according to the IP address of each gateway of the plurality of gateways and an IP address segment corresponding to each network service provider, and delivering the static routing configuration file to the node server to be deployed through a preset deployment server.

2. The method according to claim 1, wherein generating the static routing configuration file includes:
for a current gateway of the plurality of gateways, identifying a target network service provider corresponding to the current gateway and inquiring a target IP address segment corresponding to the target network service provider;
generating static routing information of the current gateway, wherein the static routing information is used to characterize that information belonging to the target IP address segment, and the information is forwarded through an IP address of the current gateway; and
summarizing static routing information of the plurality of gateways and using the summarized information as the static routing configuration file of the node server to be deployed.

3. The method according to claim 1, wherein the basic information further includes a default route of the node server to be deployed, and the default route includes an IP address of a default gateway;
correspondingly, generating the static routing configuration file includes:
for a target gateway in the plurality of gateways other than the default gateway, identifying a target network service provider corresponding to the target gateway, and inquiring a target IP address segment corresponding to the target network service provider;
generating static routing information of the target gateway, wherein the static routing information is used to characterize that information belonging to the target IP address segment, and the information is forwarded through an IP address of the target gateway;
summarizing static routing information of gateways in the plurality of gateways other than the default gateway, and using the summarized information to provide detailed routes of the node server to be deployed; and
combining the default route and the detailed routes as the static routing configuration file of the node server to be deployed.

4. The method according to claim 1, wherein the method further includes:
receiving an update instruction sent by an IP segment data maintenance server; and
acquiring and storing latest IP segment data from the IP segment data maintenance server in response to the update instruction, wherein the IP segment data includes a mapping relationship between the IP address segment and the network service provider.

5. The method according to claim 1, wherein reading multi-line routing deployment tasks from the message center includes:
according to a preset message threshold, reading a number of multi-line routing deployment tasks non-exceeding the message threshold from the message center, and combining the number of read multi-line routing deployment tasks into one deployment task; and
correspondingly, after the static routing configuration file is generated for each of the multi-line deployment tasks, integrating a number of generated static routing configuration files, corresponding to the number of read multi-line routing deployment tasks of the one deployment task, into one data packet, and delivering the integrated data packet to corresponding node servers through the preset deployment server.

6. The method according to claim 1, wherein multi-line routing deployment tasks are generated by the node server in a following manner:
identifying a routing state of the node server;
determining a message format matching the routing state, and filling the message format with a content **characterized by** the routing state, to generate a routing state message corresponding to the routing state; and
reporting the routing state message as one of the multi-line routing deployment tasks to the message center.

7. The method according to claim 6, wherein identifying the routing state of the node server includes:
identifying an IP address of a network interface card configuration in the node server, and determining a network service provider corresponding to each IP address; and
if the network service provider is determined to be more than one, determining that the static routes are required to be deployed in the node server.

8. The method according to claim 6 or claim 7, wherein identifying the routing state of the node server includes at least one of the following:
identifying whether the node server has an abnormal routing configuration;
identifying whether the node server has active/standby link interruption in a same network service provider; or
identifying whether the node server has a routing switch between different network service providers.

9. The method according to claim 6, wherein determining the message format matching the routing state includes:
determining a type of the routing state, and using the message format corresponding to the type of the routing state as the message format matching the routing state, wherein the type of the routing state at least includes an abnormal alarm type and a routing change type.

10. The method according to claim 6 or claim 9, wherein filling the message format with the content **characterized by** the routing state includes:
writing an IP address of the node server into a specified location in the message format; and
determining a target identifier for characterizing the routing state in an identifier sequence corresponding to the type of the routing state, and writing the target identifier into the message format.

11. The method according to claim 10, wherein if the type of the routing state is the abnormal alarm type, the identifier sequence corresponding to the type of the routing state at least includes an identifier for characterizing an abnormal gateway configuration, an identifier for characterizing an IP configuration error, and an identifier for characterizing a configuration loss; and
if the type of the routing state is the routing change type, the identifier sequence corresponding to the type of the routing state at least includes an identifier for characterizing a wide area network multi-line routing configuration, an identifier for characterizing a metropolitan area network multi-line routing configuration, an identifier for characterizing a multi-line default routing switch of a special local area network, and an identifier for characterizing a multi-line and single-line interruption switch of overseas and domestic transit nodes.

12. The method according to claim 6, wherein the message center includes a plurality of message queues according to divided message types, wherein the plurality of message queues at least includes a multi-line routing queue, an alarm queue, a local area network queue, and a line switch queue; and
correspondingly, the routing state message reported by the node server is stored in a corresponding message queue.

13. The method according to claim 6, wherein after reporting the routing state message as one of the multi-line routing deployment tasks to the message center, the method further includes:
checking whether the routing configuration file is received according to a specified time period; and if a latest delivered routing configuration file is received, deploying the static routes in the node server according to the latest delivered routing configuration file, and checking whether the static routes are deployed successfully after the deploying is complete.

14. An information maintenance server, wherein:
the information maintenance server includes a memory and a processor; the memory is configured to store computer programs; and the method according to any one of claims 1 to 13 is implemented when the computer programs are executed by the processor.

15. A system for deploying static routes, wherein the system includes a node server, a message center, a monitoring platform, an information maintenance server, and a preset deployment server, wherein:
the node server is configured to identify an own routing state and report a routing state message to the message center after generating the routing state message according to the routing state;
the message center is configured to forward the routing state message to the monitoring platform or the information maintenance server according to a type of the routing state message;
the information maintenance server is configured to read multi-line deployment tasks from the message center, generate a static routing configuration file according to the multi-line routing deployment tasks, and upload the static routing configuration file to the preset deployment server; and
the preset deployment server is configured to deliver the static routing configuration file to the node server to be deployed, thereby configuring the static routes in the node server to be deployed.

16. The system according to claim 15, wherein the system further includes an IP segment data maintenance server, wherein the IP segment data maintenance server is configured to send an update instruction to the information maintenance server when the IP segment data changes; and
correspondingly, the information maintenance server is further configured to acquire and store latest IP segment data from the IP segment data maintenance server in response to the update instruction, wherein the IP segment data includes a mapping relationship between an IP segment and a network service provider.
